# EUROPEAN PATENT SPECIFICATION

(11) **EP 1 249 176 B1**
(45) Date of publication and mention of the grant of the patent: **23.11.2005**
(21) Application number: 01107852.4
(22) Date of filing: 09.04.2001
(51) Int. Cl.: A23J 3/08, A23L 1/305, A23C 19/09, A23C 19/082, A23L 1/314, A23D 7/00

(54) **Process for incorporating whey proteins into foodstuffs**
Verfahren zum Zugeben von Molkeprotein in Lebensmittel
Procédé d'incorporation des protéines de petit lait dans les produits alimentaires

(43) Date of publication of application: 16.10.2002
(73) Proprietor: Kraft Foods R & D, Inc. Zweigniederlassung München, 81737 München (DE)
(72) Inventor: Wolfschoon Pombo, Alan F., Dr.-Ing., Bayerwaldstrasse 8 - 81737 München (DE); Spiegel, Thomas L., Dr.-Ing., Bayerwaldstrasse 8 - 81737 München (DE)
(74) Representative: HOFFMANN EITLE

(56) References cited:
- EP-A- 0 398 408
- EP-A- 0 603 981
- EP-A- 0 787 436
- EP-A- 0 818 149
- EP-A- 0 966 887
- WO-A-98/36647
- GB-A- 1 440 182
- US-A- 3 922 375
- US-A- 3 930 039
- US-A- 3 956 520
- US-A- 4 188 411
- US-A- 5 350 590

## Description

The present invention is concerned with the incorporation of whey proteins into foodstuffs. In particular, the invention relates to a process for incorporating whey proteins into a foodstuff using an acidified solution of whey proteins, and the foodstuff thus obtainable.

In the field of the manufacture of food, several attempts have been made to introduce larger amounts of whey proteins, for example to replace costly casein proteins and utilize wasted but rich whey proteins, without a resulting gumminess (texture effect). With respect to the example of process cheese, it has been practically impossible to incorporate larger amounts of whey proteins over a weight ratio of whey protein to casein of about 10:90. The higher the amount of whey proteins, the gummier and softer is the resultant cheese.

The following documents, the disclosure of which is incorporated herein by reference, represent technological background material on whey proteins, their properties and usage in foods:
Kinsella, J.E.; Whitehead, D.M. (1989): Proteins in whey: Chemical, physical, and structural properties. Advances in Food and Nutrition Research, 33, 343-438
Konrad, G.; Lieske, B. (1994): Gezielte thermische Denaturierung - ein alternativer Weg zu funktionellerem Molkenprotein. Deutsche Milchwirtschaft, 45, 1130-1134
Lupano, C. (1994): Effect of heat treatments in very acidic conditions on whey protein isolate properties. Journal of Dairy Science, 77, 2191-2198
Patocka, G.; Drathen, M.; Jelen, P. (1987): Heat stability of isolated whey protein fractions in highly acidic condtions. Milchwissenschaft, 42, 700-705
Shimizu, M.; Saito, M.; Yamauchi, K. (1985): Emulsifying and structrual properties of β-lactoglobulin at different pHs. Agricultural and Biological Chemistry, 49, 189-194
Strandholm, J.J.; Prochnow, R.R.; Miller, M.S.; Woodford, L.E.; Naunaber, S.M. (1989): Method for controlling melting properties of process cheese. Patent US 4 885 183
Swartz, M.L. (1988): Beverage cloud based on a whey protein-stabilized lipid. Patent US 4 790 998
Yamauchi, K.; Shimizu, M.; Kamiya, T. (1980): Emulsifying properties of whey protein. Journal of Food Science, 45, 1237-1242

As regards the structural and textural properties of foods, one possibility to increase the firmness thereof would be the polymerization of the proteins by an enzyme, namely a transglutaminase. However, transglutaminases predominantly polymerize caseins, whereas their reactivity towards whey proteins is very low or even absent. Thus, the effect of enzymatic treatment on whey protein-enriched food compositions is considerably low.

The following documents represent technological background material on transglutaminases, their effect on proteins and usage in foods:
Aboumahmoud, R.; Savello, P. (1990): Cross-linking of whey proteins by transglutaminase. Journal of Dairy Science 73, 256-263
Budolfsen, G.; Nielsen, P.M. (1999): Method for production of an acidified edible gel on milk basis. Patent US 5 866 180
Chanyongvorakul, Y.; Matsumara, Y.; Sawa, A.; Nio, N.; Mori, T. (1997): Polmyerization of β-lactoglobulin and bovine serum albumin at oil-water interfaces in emulsions by transglutaminase. Food Hydrocolloids 11, 449-455
Faergemand, M.; Murray; B.S.; Dickinson, E. (1997): Cross-linking of milk proteins at the oil-water interface. Journal of Agricultural and Food Chemistry 45, 2514-2519
Faergemand, M.; Otte, J.; Qvist, K.B. (1997): Enzymatic cross-linking of whey proteins by a Ca²⁺-independent microbial transglutaminase from *Streptomyces lydicus*. Food Hydrocolloids 11, 19-25
Feargemand, M.; Otte, J.; Qvist, K.B. (1997): Emulsifying properties of milk proteins cross-linked with microbial transglutaminase. International Dairy Journal 8, 715-723
Kuraishi, T.; Sakamoto, J.; Soeda, T. (1996): Production of cheese using transglutaminase. Patent Application EP 0 711 504 (JP 81-73032 A2)
Soeda, T. (1999): Cheese whey protein having improved texture, process for producing the same and use thereof. Patent Application EP 0 966 887
Traoré, F.; Meunier, J.C. (1992): Cross-linking activity of placental FXIIIa on whey proteins and caseins. Journal of Agricultural and Food Chemistry 40, 399-402
Tsukasaki, F.; Minagawa, E.; Mikami, T.; Nonaka, M.; Motoki, M. (1990): Preparation of cheese food. Patent JP 21-31537 A2
Yamamoto, Y. (1996): Rheology of milk protein gels and protein-stabilized emulsions cross-linked by transglutaminase. Journal of Agricultural and Food Chemistry 44, 1371-1377

US 4,188,411 discloses a protein-enriched, unripened cheese composition which is prepared by dispersing a water-soluble concentrate of whey protein in water at a pH of 3.5, then holding the resulting dispersion at 95 °C and admixing the resulting product with skim milk curds.

US 3,956,520 describes a cheese filler product produced from cheese whey by heating cheese whey to about 80 °C, acidifying the whey in at least two stages to cause separation of fine particulate cheese solids onto the surface of the whey, cooking the cheese solids to a moisture content of about 60-70 %, drying the cheese solids to about 20 - 30 % moisture with continuous agitation, salting and grating the cheese solids.

US 3,930,039 describes adjusting a whey solution to a pH of 2.7 - 3.3, then subjecting the whey to ultrafiltration and finally sterilizing the whey by pasteurization at a temperature of above 85 °C. The whey protein concentrate thus obtained is a food or food supplement.

US 3,922,375 discloses a soluble whey protein fraction which is prepared by adjusting the pH of an aqueous solution of substantially undenatured whey proteins to a value of 4.4 - 5.0 to form a precipitate, removing the lipid/protein complexes from the solution and recovering the filtrate containing a soluble whey protein fraction in solution.

WO 98/36647 discloses a method for the isolation of milk or whey proteins in a concentrated and functional form by acidification of skimmed milk or whey to a pH below the isoelectric point, followed by heating to at least 50 °C at the acidic pH, preferably to above 90 °C.

GB 1 440 182 discloses a process for the preparation of an oil-in-water emulsion which comprises preparing an aqueous phase having a pH of 4.2 - 5.5 and containing globular protein, mixing the aqueous phase with a non-protein emulsifier and fat, homogenizing the mixture, pasteurizing it by heat and packaging the emulsion obtained.

EP 0 603 981 describes the preparation of a heat-stable oil-in-water emulsion by preparing an oil-in-water emulsion containing oil and whey protein, adjusting the pH of the emulsion to a value higher than 6.5, heating the emulsion to a temperature of 75 - 140 °C and cooling the emulsion to a temperature of less than 20 °C, followed by adjusting the pH of the emulsion to a value between 4 and 5.

EP 0 398 408 discloses a process for the production of a water-in-oil emulsion spread which comprises admixing an aqueous phase containing undenatured whey protein with a fatty phase and cooling and working the mixture until an edible fat-continuous emulsion results. The aqueous ingredients of the spread may be pasteurized by heat treatment at a temperature of 65 - 80 °C.

EP 0 818 149 discloses a food composition obtainable by preheating a dairy food component to a temperature of 40 - 60 °C, dissolving milk whey proteins in the resulting mixture with stirring, preparing a fat phase in the presence of a lipophilic surfactant, mixing the fat phase with the milk whey protein mixture with stirring to produce an oil-in-water emulsion, pasteurizing the emulsion thus obtained at a temperature of 80 - 110 °C, precooling the mixture to a temperature of 30 - 60 °C and aerating the mixture by injection of an inert gas.

EP 0 787 436 describes a process for producing low fat sausage by adding heat-denatured whey protein and an emulsified composition comprising heat-denatured whey protein and edible oil and fat to raw material meat for sausages.

US 5,350,590 describes a method for producing a water-dispersible, heat-stable fat replacer composition for food comprising preparing an aqueous mixture of whey protein and casein having a pH of 3.0 - 6.6, heating the mixture to denature the whey protein and desolubilize the casein, cooling the mixture below the whey protein denaturing temperature and recovering the co-formed agglomerates.

In view of the above, the present inventors thoroughly studied the properties of aqueous solutions of whey proteins and conceived new ways to modify such proteins, thus providing a solution to the problems of the prior art as outlined above.

Accordingly, the present invention provides a process for incorporating whey proteins into a foodstuff comprising the steps of
- acidifying an aqueous solution of one or more whey proteins below their isoelectric pH,
- heat-treating said acidified solution at a temperature of more than 80 °C,
- blending the acidified solution with a foodstuff base to form a foodstuff and
- further blending and incubating the foodstuff with a transglutaminase.

Potential sources for the whey proteins referred to herein are whey protein concentrates (WPC) and whey protein isolates (WPI), either as reconstituted WPC and/or WPI powders or preferably as liquid concentrates such as ultrafiltrated whey. Likewise, normal whey powder may represent a source for the whey proteins referred to in this description. The whey can be rennet whey or acid whey. Microfiltration permeate obtained by using, e.g., a 0.1 µm membrane, which permeate contains the native whey proteins, and the ultrafiltrated concentrate thereof may also be used. A combination of one or more whey protein sources may be utilized to provide whey proteins in the present invention.

The whey proteins initially used in the present invention may be native or denatured whey proteins, with preference given to predominantly native whey proteins. However, particulate and highly denatured whey proteins also exhibit very good effects in the present invention.

The protein content in the aqueous solution of one or more whey proteins is preferably at least 4 % by weight (with total solids being, for example, about 10 % or more) to reach the desired whey protein content in the final food products. The maximum whey protein content is preferably about 20 % by weight. More preferably, the whey protein content of the aqueous solution is in the range of 8 to 12 % by weight (preferably 12 to 20 % total solids).

In the first step of the process for preparing a whey protein-stabilized fatty emulsion, the aqueous solution of one or more whey proteins as outlined above is acidified below the isoelectric pH of the whey proteins contained in said solution. For the purpose of acidifying the whey protein solution, any acid may be used that is not objectionable to the intended application and use of the final whey protein-stabilized fatty emulsion. Specifically, any food grade acid such as lactic, citric, phosphoric or hydrochloric acid and any acidulant such as glucono-δ-lactone or vinegar may be used, alone or in combination of two or more thereof. The preferred acid is 90 % lactic acid. Optionally, it is possible to employ a lactic acid producing bacterial culture in the presence of a suitable sugar such as glucose or lactose, optionally in combination with one or more of the acids mentioned before. In general, the concentration of the acid(s) and the temperature used during acidification are adjusted such that no detrimental effects are induced. For example, if there are caseins present in the solution, it may be necessary to adjust the initial concentration of the acid(s) and the temperature during acidification in such a way that no coagulation (flocculation) of caseins is induced. Similarly, too high (e.g. >65 °C) temperatures may induce a whey protein coagulation if the whey proteins are in the native state or not fully denatured. Accordingly, room (ambient) temperature represents a preferred temperature for a practical application.

The pH accomplished in the acidification step is preferably considerably below the isoelectric point of the whey proteins comprised in the aqueous solution. Thus, the pH reached is preferably in the range of 4.5 to 2.5, more preferably 4.0 to 3.5. As a reference, the isoelectric points of major whey proteins are: ^{~}5.1 (β-lactoglobulin); 4.2-4.5 (α-lactalbumin); 4.7-4.9 (bovine serum albumin) and 6.3-7.0 (immunoglobulin G1).

In the acidification step, the aqueous solution of the whey proteins is preferably agitated when adding the acid in order to avoid local peak concentrations of the acid. Although it is also possible to add the aqueous solution of whey proteins to an aqueous solution of the acid(s), this may not be the preferred way of acidification due to potential detrimental peak acid concentrations. Preferably, the whey protein solution after addition of the acid is allowed to stand or is agitated until an equilibrium state is reached, for example, for one or more minutes, preferable about 10 to 30 minutes.

In the second step of the process for preparing a whey protein-stabilized fatty emulsion, the acidified solution of whey proteins is blended and homogenized with one or more fats. In this step, any fat may be used which is not objectionable to the desired application of the resulting fatty emulsion. The preferred fat is milk fat, e.g. in the form of cream, plastic cream and more preferably butter or anhydrous butter fat. However, other sources for fats may be used, especially vegetable fats and oils, or animal fat, such as beef tallow, depending on the application of the whey protein-stabilized fatty emulsion. A combination of two or more fats may be used. The one or more fats are used in an amount such that the ratio of whey protein to fat in the resulting fatty emulsion is in the range of preferably 3:1 to 1:5 (the total fat content in the fatty emulsion being preferably in the range of 3 to 30 % by weight), more preferably 2:1 to 1:2.

The blending of the acidified solution of whey proteins with one or more fats is followed by a homogenization, i.e. a shear treatment. Blending and homogenizing the two components, i.e. acidified whey protein solution and fats, may be a combination of one or more steps. For example, the components may first be blended and subsequently subjected to a shear treatment, or blending may be effected simultaneously in the homogenization, for example by introducing the components into a homogenizer and starting the device. Preferably, blending and homogenizing is carried out in a single apparatus for economic reasons and effectiveness. The blending and homogenizing step may be carried out using a conventional homogenizer and is preferably carried out at a temperature of from 50 to 70 °C and a pressure of from 100 to 300 bar, depending on the fat content (lower pressures may be more suitable at higher fat levels). In general, the homogenization can be conducted at a temperature and pressure and for a period which are conventional in this art.

It is assumed that the resulting whey protein-stabilized fatty emulsion is of the oil-in-water emulsion type. However, this assumption should not be construed as restricting the scope of the present invention, and other structures such as water-in-oil or bicontinuous structures may be contemplated, depending on the components and amounts used thereof.

The blending and homogenizing step is followed by a heat treatment at a temperature of 80 °C or more, and optionally at an elevated pressure. The preferred temperature range for the heat treatment is 80 to 95 °C, and the preferred holding time is in the range of 1 to 10 minutes, for example a heat treatment condition of a temperature of 85 °C and a holding time of 5 minutes. It is assumed that the subsequent heat treatment should modify the topography of the already changed whey proteins (due to the acidification below their isoelectric pH) to make them even more functional, for example in replacing casein in casein-containing foodstuffs.

Following the blending/homogenization or the heat treatment, the whey protein-stabilized fatty emulsion may be cooled (e.g., to room temperature) or directly used in the hot state in the desired application such as outlined below.

The whey protein-stabilized fatty emulsion obtainable by the above process preferably has a fat content in the range of from 3 to 30 % by weight and a whey protein content in the range of from 5 to 15 % by weight. In a preferred embodiment, an emulsion made in accordance with the process of the invention (e.g., by mixing WPC and butter) has 20 to 25 % total solids, 5 to 10 % fat, 8 to 12 % protein and 3 to 5 % sugars, based on the total weight of the emulsion (the presence of additional components such as sugars may result from the whey protein source such as WPC or the deliberate addition of further components).

The protein-stabilized fatty emulsion may be used for incorporating whey proteins into a foodstuff. Thus, the present invention provides a process for incorporating whey protein into a foodstuff comprising the steps of blending the whey protein-stabilized fatty emulsion obtainable by the above process of the invention with a foodstuff base to form a foodstuff. In an alternative embodiment, the process for incorporating whey proteins into a foodstuff comprises the steps of acidifying an aqueous solution of one or more whey proteins below their isoelectric pH, heat-treating the acidified solution at a temperature of more than 80 °C and blending the acidified and heat-treated solution with a foodstuff base to form a foodstuff. In this alternative embodiment, the aspects, conditions and properties of acidifying an aqueous solution of one or more whey proteins below their isoelectric pH and heat-treating the acidified solution are as defined above having regard to the process for preparing a whey protein-stabilized fatty emulsion.

The foodstuff base may be any dairy or non-dairy based foodstuff base. In fact, the present inventors have found that using a specifically acidified and heat-treated whey protein solution or whey protein fatty emulsion provides a means for using higher amounts of whey proteins, or to incorporate more whey proteins, into other food systems. Preferably, the foodstuff base is a dairy based foodstuff base and more preferably a casein-containing foodstuff base. Moreover, the foodstuff base can be foodstuff base containing meat proteins. Specific examples of the foodstuff base are bases for cream cheese, process cheese, natural cheese and mayonnaise, as well as process meat products.

The conditions for blending the fatty emulsion and/or the acidified and heat-treated whey protein solution and the foodstuff base are those normally found in the manufacture (blending of raw materials) of foodstuffs, for example process cheese, cream cheese or natural cheese, or process meat. If the whey protein-stabilized fatty emulsion of the invention is used, the weight ratio of fatty emulsion to foodstuff base is preferably in the range of from 20:80 to 70:30. Similarly, if the acidified and heat-treated solution of one or more whey proteins is used, the weight ratio of whey proteins to foodstuff base is preferably in the range of from 20:80 to 70:30. If a casein-containing foodstuff base is used, the blending ratio of fatty emulsion or acidified whey protein solution to casein-containing foodstuff base is preferably such that the weight ratio of whey proteins to casein in the resulting casein-containing foodstuff is in the range of >10:90 to 80:20, more preferably 20:80 to 40:60. If a meat protein-containing foodstuff base is used, the blending ratio of fatty emulsion or acidified whey protein solution to meat protein-containing foodstuff base is preferably such that the weight ratio of whey proteins to meat proteins in the resulting meat protein-containing foodstuff is in the range of from 10:90 to 80:20, more preferably 20:80 to 40:60. Especially, if meat proteins are used, the resulting meat protein-containing foodstuff can also include animal fat, such as beef tallow.

If desired, the resulting foodstuff may be further blended and incubated with a transglutaminase enzyme. Normally, whey proteins do not react with transglutaminases. The present inventors have found that the pre-treatment of whey protein solutions in the acid pH range (below the isoelectric pH of the whey proteins) as described in this invention offers a possibility to modify the behavior of whey proteins also towards the action of transglutaminase. Accordingly, in another aspect of the present invention, the process for incorporating whey proteins into a foodstuff comprises the further step of blending and incubating the resulting foodstuff with the enzyme transglutaminase. As is generally known by the person skilled in the art, there are different transglutaminases, classified under the general nomenclature EC 2.3.2.13, and any of these transglutaminases can be used in the present invention. In particular, it is possible to use a transglutaminase produced by *Streptoverticilium mobaraense* which is commercially available under the name of "Aktiva-MP" from Ajinomoto. The enzyme employed is preferably used in conventional amounts such as 1 to 6 u/g (units enzyme per gram protein in the system). The incubating conditions are preferably a temperature in the range of 20 to 60 °C, more preferably 50 °C; a duration of 5 to 60 minutes; and a pH of 5.5 to 7.5, more preferably 6 to 7. Preferably, no shear is applied during the incubation period.

The foodstuff which is obtainable by the process according to the invention, for example process cheese, cream cheese, natural cheese, mayonnaise or process meat, is superior as compared to foodstuffs of the prior art in that a high firmness and short texture of the resultant products can be accomplished even at high whey protein contents, which is not observed when native whey proteins are utilized. Specifically, if a casein-containing foodstuff is manufactured, such as a process cheese formulation, high protein to casein ratios of up to 80:20 by weight can be established together with a favorable appearance and excellent sensory properties.

### Example 1

A whey protein concentrate (17.7 % total solids, 10 % protein) with the majority of its proteins in their native state is acidified with lactic acid down to pH 3.8. Afterwards the acidified whey protein solution is blended with 5 % molten butter at room temperature and homogenized at 220 bar and 60 °C. The emulsion is then heat treated at 85 °C for 5 min. Then 34.2 parts of the heated emulsion are immediately blended with 3.5 parts of rennet casein, 3.5 parts of milk concentrate, 1.4 parts of starch, 7 parts of hard cheese, 15.9 parts of butter, 5.3 parts of whey powder, 3.0 parts of emulsifying salts, 1 part of salt and 25.2 parts of water so as to complete 100 parts. After thoroughly mixing, the blend is treated as in the conventional manufacture of process cheese spreads.

### Example 2

A whey protein concentrate (17.7 % total solids, 10 % protein) with the majority of its proteins in their native state is acidified with lactic acid down to pH 3.8. Afterwards the acidified whey protein solution is blended with 5 % molten butter at room temperature and homogenized at 220 bar and 60 °C. The emulsion is then heat treated at 85 °C for 5 min. Then 34.2 parts of the heated emulsion are immediately blended with 3.5 parts of rennet casein, 3.5 parts of milk concentrate, 1.4 parts of starch, 7 parts of hard cheese, 15.9 parts of butter, 5.3 parts of whey powder, 3.0 parts of emulsifying salts, 1 part of salt and 25.2 parts of water so as to complete 100 parts. After thoroughly mixing, the blend is incubated with a microbial transglutaminase (5 units per gram protein in the blend) at 50 °C for 1 h. The blend is then treated as in the conventional manufacture for process cheese spreads. The following table shows the firmness (Stevens Texture Analyzer) of the final cheese produced as described above compared to a standard product and a product with a native whey protein concentrate.

| Product | Whey protein: casein ratio | Transglutaminase | Firmness [g] |
|---|---|---|---|
| Standard | 10:90 | no | 57 |
| | | yes | 160 |
| With native whey protein | 45:55 | no | 36 |
| | | yes | 64 |
| With whey protein emulsion pH 3.8, heated | 45:55 | no | 42 |
| | | yes | 115 |

## Claims

1. A process for incorporating whey proteins into a foodstuff comprising
acidifying an aqueous solution of one or more whey proteins below their isoelectric pH,
heat-treating said acidified solution at a temperature of more than 80°C,
blending the acidified solution of one or more whey proteins with a foodstuff base to form a foodstuff, and
further blending and incubating the resulting foodstuff with a transglutaminase.

2. The process according to claim 1 comprising blending and homogenizing the acidified solution of one or more whey proteins with one or more fats to form a whey protein-stabilized fatty emulsion, prior to the heat treatment at a temperature of more than 80°C.

3. The process according to claim 2 wherein the weight ratio of whey proteins to fats is in the range of 3:1 to 1:5 based on dry matter.

4. The process of any one of claims 1 to 3 wherein the foodstuff base contains casein.

5. The process of claim 4 wherein the weight ratio of whey proteins to casein in the resulting casein-containing foodstuff is in the range of >10:90 to 80:20, preferably 20:80 to 40:60.

6. The process of any one of claims 1 to 5 wherein the foodstuff base is a process cheese formulation.

7. The process of any one of claims 1 to 3 wherein the foodstuff base contains meat proteins.

8. The process of claim 7 wherein the weight ratio of whey proteins to meat proteins in the resulting meat protein-containing foodstuff is in the range of from 10:90 to 80:20, preferably 20:80 to 40:60.

9. The process of claim 7 or 8 wherein the resulting meat protein-containing foodstuff includes animal fat.

10. The process of any of claims 7 to 9 wherein the foodstuff base is process meat base.

11. A foodstuff obtainable by the process according to any one of claims 1 to 10.

12. The foodstuff according to claim 11 which is a process cheese.

13. The foodstuff according to claim 11 which is a process meat product.

## Patentansprüche

1. Verfahren zum Einfügen von Molkeproteinen in ein Nahrungsmittel, umfassend Ansäuern einer wässrigen Lösung aus einem oder mehreren Molkeproteinen unterhalb ihres isoelektrischen pH, Wärmebehandlung der angesäuerten Lösung bei einer Temperatur von mehr als 80°C, Mischen der angesäuerten Lösung aus einem oder mehreren Molkeproteinen mit einer Nahrungmsittelbasis zur Erzeugung eines Nahrungsmittels und weiteres Mischen und Inkubieren des resultierenden Nahrungsmittels mit einer Transglutaminase.

2. Verfahren nach Anspruch 1, umfassend das Mischen und Homogenisieren der angesäuerten Lösung aus einem oder mehreren Molkeproteinen mit einem oder mehreren Fetten zur Bildung einer Molkeprotein-stabilisierten Fettemulsion, vor der Wärmebehandlung bei einer Temperatur von mehr als 80°C.

3. Verfahren nach Anspruch 2, worin das Gewichtsverhältnis der Molkeproteine zu Fetten im Bereich von 3:1 bis 1:5, bezogen auf den Trockenstoff, ist.

4. Verfahren nach einem der Ansprüche 1 bis 3, worin die Nahrungsmittelbasis Casein enthält.

5. Verfahren nach Anspruch 4, worin das Gewichtsverhältnis der Molkeproteine zu Casein in dem resultierenden caseinhaltigen Nahrungsmittel im Bereich von >10:90 bis 80:20, bevorzugt 20:80 bis 40:60 ist.

6. Verfahren nach einem der Ansprüche 1 bis 5, worin die Nahrungsmittelbasis eine Prozesskäseformulierung ist.

7. Verfahren nach einem der Ansprüche 1 bis 3, worin die Nahrungsmittelbasis Fleischproteine enthält.

8. Verfahren nach Anspruch 7, worin das Gewichtsverhältnis der Molkeproteine zu Fleischproteinen in dem resultierenden fleischproteinhaltigen Nahrungsmittel im Bereich von 10:90 bis 80:20, bevorzugt 20:80 bis 40:60 ist.

9. Verfahren nach Anspruch 7 oder 8, worin das resultierende fleischproteinhaltige Nahrungsmittel tierisches Fett umfasst.

10. Verfahren nach den Ansprüchen 7 bis 9, worin die Nahrungsmittelbasis Prozessfleischbasis ist.

11. Nahrungsmittel, erhältlich durch das Verfahren nach einem der Ansprüche 1 bis 10.

12. Nahrungsmittel nach Anspruch 11, das ein Prozesskäse ist.

13. Nahrungsmittel nach Anspruch 11, das ein Prozessfleischprodukt ist.

## Revendications

1. Procédé pour incorporer des protéines de petit-lait dans un produit alimentaire comprenant les étapes consistant à
acidifier une solution aqueuse d'une ou plusieurs protéines de petit-lait en dessous de leur pH isoélectrique,
traiter thermiquement ladite solution acidifiée à une température de plus que 80°C,
mélanger la solution acidifiée d'une ou plusieurs protéines de petit-lait avec une base de produit alimentaire pour former un produit alimentaire, et
mélanger et mettre à incuber de plus le produit alimentaire résultant avec une transglutaminase.

2. Procédé selon la revendication 1, comprenant l'étape consistant à mélanger et homogénéiser la solution acidifiée d'une ou plusieurs protéines de petit-lait avec un ou plusieurs matières grasses pour former une émulsion grasse stabilisée aux protéines de petit-lait, avant l'étape de traitement thermique à une température supérieure à 80°C.

3. Procédé selon la revendication 2, dans lequel le rapport en poids des protéines de petit-lait aux matières grasses est dans la plage de 3 : 1 à 1 : 5 sur la base de la matière sèche.

4. Procédé selon l'une quelconque des revendications 1 à 3, dans lequel la base de produit alimentaire contient de la caséine.

5. Procédé selon la revendication 4, dans lequel le rapport en poids des protéines de petit-lait à la caséine dans le produit alimentaire contenant de la caséine résultant est dans la plage de > 10 : 90 à 80 : 20, de préférence de 20 : 80 à 40 : 60.

6. Procédé selon l'une quelconque des revendications 1 à 5, dans lequel la base de produit alimentaire est une formulation de fromage traité.

7. Procédé selon l'une quelconque des revendications 1 à 3, dans lequel la base de produit alimentaire contient des protéines de viande.

8. Procédé selon la revendication 7, dans lequel le rapport en poids des protéines de petit-lait aux protéines de viande dans le produit alimentaire contenant des protéines de viande résultant est dans la plage de 10 : 90 à 80 : 20, de préférence de 20 : 80 à 40 : 60..

9. Procédé selon la revendication 7 ou 8. dans lequel le produit alimentaire contenant des protéines de viande résultant inclut des matières grasses d'animaux.

10. Procédé selon l'une quelconque des revendications 7 à 9, dans lequel la base de produit alimentaire est une base de viande traitée.

11. Produit alimentaire qui peut être obtenu par le procédé selon l'une quelconque des revendications 1 à 10.

12. Produit alimentaire selon la revendication 11, qui est un fromage traité.

13. Produit alimentaire selon la revendication 11, qui est un produit de viande traitée.
